# EUROPEAN PATENT APPLICATION

(11) **EP 4 625 584 A1**
(43) Date of publication of application: **01.10.2025**
(21) Application number: 23894296.5
(22) Date of filing: 16.10.2023
(51) Int. Cl.: H01M 10/0567, H01M 10/052

(54) **NON-AQUEOUS ELECTROLYTE AND SECONDARY BATTERY**

(30) Priority: 24.11.2022 JP 2022187287
(71) Applicant: Panasonic Intellectual Property Management Co., Ltd., Kadoma-shi, Osaka 571-0057 (JP)
(72) Inventor: WATARIGAWA Shohei, Osaka, 571-0057 (JP)
(74) Representative: Eisenführ Speiser
(86) International application number: PCT/JP2023/037444
(87) International publication number: WO 2024/111284

(57) **Abstract**

Disclosed is a non-aqueous electrolyte for a secondary battery that includes a non-aqueous solvent, a salt soluble in the non-aqueous solvent, and an additive soluble in the non-aqueous solvent. The additive includes a heterocyclic compound and a sulfur-containing compound. The heterocyclic compound is represented by General Formula (1). X1 to X4 are each independently an oxygen atom or a sulfur element. R1 to R4 are each independently an alkyl group having 1 to 5 carbon atoms in which at least one hydrogen atom may be substituted with a halogen atom.

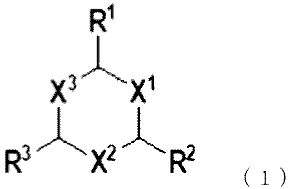

## Description

### [Cross Reference to Related Application]

The present disclosure claims the benefit of priority to Japanese Patent Application No. 2022-187287 filed with the Japan Patent Office on November 24, 2022, of which entire content is incorporated herein by reference.

### [Technical Field]

The present disclosure relates to a non-aqueous electrolyte and a secondary battery.

### [Background Art]

Patent Literature 1 proposes "an electrolyte characterized by containing an electrolytic solution that includes at least one compound selected from the group consisting of paraldehyde and derivatives thereof".

### [Citation List]

### [Patent Literature]

PTL 1: Japanese Laid-Open Patent Publication No. 2007-141494

### [Summary of Invention]

### [Technical Problem]

Paraldehyde forms a coating on the surface of a negative electrode in a secondary battery. This coating suppresses an electrolyte decomposition reaction on the negative electrode, and therefore, the high-temperature storage characteristics of the secondary battery are improved. Meanwhile, the effects of improving the high-temperature cycle characteristics and reducing initial resistance of a secondary battery exhibited by paraldehyde are insufficient.

### [Solution to Problem]

An aspect of the present disclosure relates to a non-aqueous electrolyte for a secondary battery, including: a non-aqueous solvent; a salt soluble in the non-aqueous solvent; and an additive soluble in the non-aqueous solvent, wherein the additive includes a heterocyclic compound and a sulfur-containing compound, the heterocyclic compound is represented by General Formula (1):

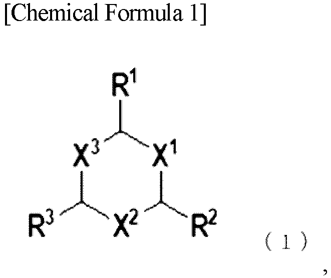

X1 to X3 are each independently an oxygen atom or a sulfur element, and R1 to R3 are each independently an alkyl group having 1 to 5 carbon atoms in which at least one hydrogen atom may be substituted with a halogen atom.

Another aspect of the present disclosure relates to a secondary battery including: a positive electrode; a separator; a negative electrode that faces the positive electrode with the separator interposed between the positive electrode and the negative electrode; and a non-aqueous electrolyte, wherein the non-aqueous electrolyte is the non-aqueous electrolyte for a secondary battery as described above.

### [Advantageous Effects of Invention]

With the present disclosure, it is possible to reduce the initial resistance of a secondary battery and improve the high-temperature cycle characteristics.

While novel features of the present invention are set forth in the appended claims, the present invention, both as to organization and content, will be better understood and appreciated, along with other objects and features thereof, from the following detailed description taken in conjunction with the drawings.

### [Brief Description of Drawings]

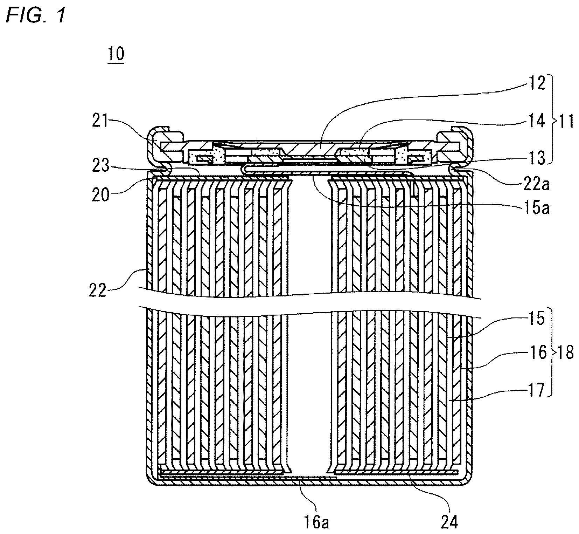

FIG. 1 is a vertical cross-sectional view of a secondary battery according to an embodiment of the present disclosure.

### [Description of Embodiments]

Although an embodiment of the present disclosure will be described below by use of an example, the present disclosure is not limited to the example described below. Although specific numerical values, materials, and the like may be mentioned as examples in the following description, other numerical values, materials, and the like may be used as long as effects of the present disclosure can be obtained. Note that known constituent elements of a secondary battery may be applied to constituent elements other than parts characteristic of the present disclosure. The wording "a range between a numerical value A and a numerical value B" as used in this specification refers to a range that includes the numerical values A and B. For example, the wording "A to B mol%" is used synonymously with the wording "A mol% or more and B mol% or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit. When a plurality of materials are given as examples, one type of material selected from these materials may be used alone, or two or more types of materials may be used in combination.

The present disclosure encompasses combinations of matters described in two or more claims selected suitably from the multiple claims described in the attached claims. In other words, as long as there is no technical inconsistency, it is possible to combine matters described in two or more claims selected suitably from the multiple claims described in the attached claims.

Non-aqueous electrolyte secondary batteries include lithium-ion secondary batteries in which a material that reversibly occludes and releases at least lithium ions is used as a negative electrode active material, lithium secondary batteries in which lithium metal is deposited on a negative electrode during charge and lithium metal dissolves during discharge, solid-state batteries that include a gel electrolyte, and the like.

A non-aqueous electrolyte secondary battery according to the present disclosure includes a positive electrode, a negative electrode, and a non-aqueous electrolyte. A separator is typically disposed between the positive electrode and the negative electrode. The non-aqueous electrolyte typically has lithium ion conductivity.

In this specification, the "resistance" in an increase in resistance of a secondary battery can be evaluated based on the direct-current resistance (DCR) of the secondary battery shortly after shipment (meaning "not used" or "after charged and discharged less than 10 times") measured at 25°C. The "high-temperature cycle characteristics" can be evaluated based on the capacity retention rate of a secondary battery after a predetermined number of cycles of constant current-constant voltage charging (CCCV charging) are conducted at 45°C. The "amount of maintained gas" can be evaluated based on the amount of gas collected from a battery that is stored at 80°C for 3 days after charged.

### [Non-Aqueous Electrolyte]

The non-aqueous electrolyte includes a non-aqueous solvent, a salt, and an additive. The non-aqueous electrolyte that includes the non-aqueous solvent is typically an electrolytic solution in a liquid form, but the fluidity thereof may be restricted using a gelling agent or the like. In lithium-ion secondary batteries, lithium-metal secondary batteries, and the like, a lithium salt is used as the salt. The salt and the additive are basically dissolved in the non-aqueous solvent, but a portion of the salt or additive may be deposited or separate without being dissolved as long as the effects of the invention are not significantly impaired. The additive defined by the general formula, which will be described below, may be a salt. In this case, another salt is dissolved as a supporting electrolyte in the non-aqueous solvent.

The non-aqueous electrolyte collected from the secondary battery may contain little additive. In this case, an oxidation product or reduction product of the additive is contained as a coating component on the surface of the positive electrode or the surface of the negative electrode. Even in such a case, the additive in an amount larger than or equal to the detection limit remains in the non-aqueous electrolyte collected from the secondary battery, thus making it possible to confirm that the non-aqueous electrolyte contains the additive.

### (Additive)

In this specification, a heterocyclic compound and a sulfur-containing compound are classed as the additives.

### (Heterocyclic Compound)

The heterocyclic compound is represented by General Formula (1):

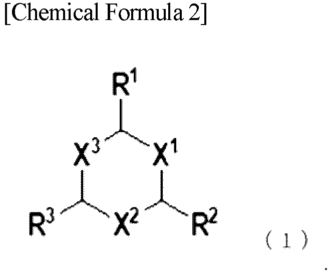

X1 to X3 are each independently an oxygen atom or a sulfur element. R1 to R3 are each independently an alkyl group having 1 to 5 carbon atoms in which at least one hydrogen atom may be substituted with a halogen atom. The halogen atom may be any of a fluorine atom, a chlorine atom, and a bromine atom, among which the fluorine atom is desirable.

The heterocyclic compound represented by General Formula (1) (this compound is also referred to as a "heterocyclic compound (1)" hereinafter) is exceptional among compounds having similar structures, that is, it is unlikely to increase the resistance of a secondary battery and can reduce the resistance. Also, the heterocyclic compound (1) can improve the high-temperature cycle characteristics of the secondary battery. However, when the heterocyclic compound (1) is used alone, the resistance of the secondary battery is still high, and the effect of improving the high-temperature cycle characteristics is insufficient.

Meanwhile, when the sulfur-containing compound is used together with the heterocyclic compound (1), the resistance of the secondary battery can be significantly reduced. When the heterocyclic compound (1) and the sulfur-containing compound are used together, the high-temperature cycle characteristics of the secondary battery are significantly improved.

It is considered that the reason why such a synergistic effect is obtained is that, when the heterocyclic compound (1) and the sulfur-containing compound are used together, rigid hybrid coatings are formed as protective coatings on both the positive electrode and the negative electrode. The hybrid coatings reduce generation of gas by suppressing a side reaction to a high degree at high temperatures, and reduce the charge-transfer resistance of the positive electrode and the negative electrode while improving the high-temperature cycle characteristics.

It is assumed that the coating components that are derived from the heterocyclic compound (1) and the sulfur-containing compound included in the hybrid coatings suppress degradation of a positive electrode active material included in the positive electrode through, for example, interaction with a transition metal element included in the positive electrode active material. In particular, when the positive electrode active material includes a lithium-containing composite oxide high in the Ni content, the degradation suppressing effect is prominent.

It is assumed that the coating components that are derived from the heterocyclic compound (1) and the sulfur-containing compound included in the hybrid coatings act to suppress the degradation of a negative electrode active material included in the negative electrode through interaction with an element included in the negative electrode active material. In particular, when the negative electrode active material includes a silicon-containing material, the degradation suppressing effect is prominent.

It is desirable that the steric hindrance of R1 to R3 is smaller, and R1 to R3 may be a methyl group, an ethyl group, an ethylene group, a propyl group, a propylene group, or the like. Typically, R1 to R3 are the same group, and may be a methyl group, an ethyl group, an n-propyl group, or an iso-propyl group. One or more hydrogen atoms of the alkyl group may be substituted with a halogen atom. The halogen atom is desirably a fluorine atom.

More specifically, the heterocyclic compound (1) may be at least one compound selected from the group consisting of paraldehyde, trithioacetaldehyde, 2,4,6-triethyl-1,3,5-trioxane, 2,4,6-tripropyl-1,3,5-trioxane, and 2,4,6-tris(propan-2-yl)-1,3,5-trioxane (also referred to as "trihetero compounds (TH)" hereinafter).

Paraldehyde is represented by the following formula.

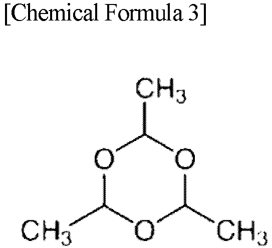

Trithioacetaldehyde is represented by the following formula.

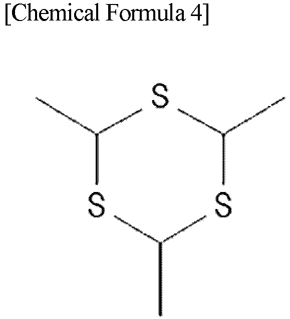

2,4,6-Triethyl-1,3,5-trioxane is represented by the following formula.

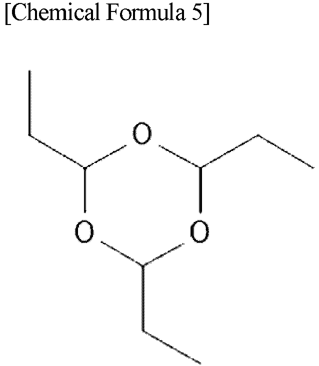

2,4,6-Tripropyl-1,3,5-trioxane is represented by the following formula.

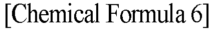

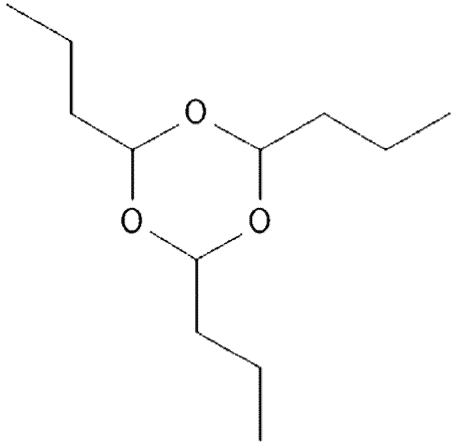

2,4,6-Tris(propan-2-yl)-1,3,5-trioxane is represented by the following formula.

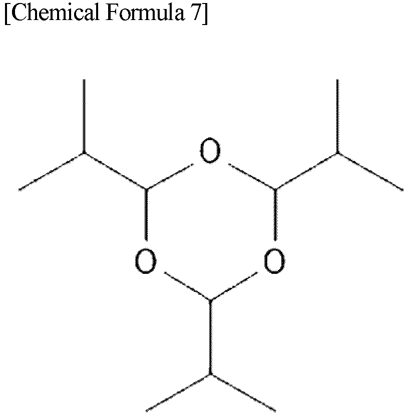

The content of the heterocyclic compound (1) in the non-aqueous electrolyte is, for example, 3 mass% or less, and may be 0.01 mass% to 3 mass%, 0.1 mass% to 2.5 mass%, or 0.5 mass% to 2 mass%. It is considered that, in this case, the side reaction suppressing effect is improved because the hybrid coatings are suitably formed and a charge and discharge reaction is likely to uniformly progress. However, in the secondary battery, the heterocyclic compound (1) is consumed to form the coatings. Accordingly, it is sufficient that the concentration of the heterocyclic compound (1) in the non-aqueous electrolyte collected from the secondary battery is higher than or equal to the detection limit.

### (Sulfur-Containing Compound)

The sulfur-containing compound need only be a compound that includes an S=O structure. The sulfur-containing compound includes, for example, a hexavalent or tetravalent sulfur atom. That is to say, the sulfur-containing compound may include at least one compound selected from the group consisting of hexavalent sulfur compounds and tetravalent sulfur compounds.

The hexavalent sulfur compounds have, for example, a structure represented by General Formula (2):

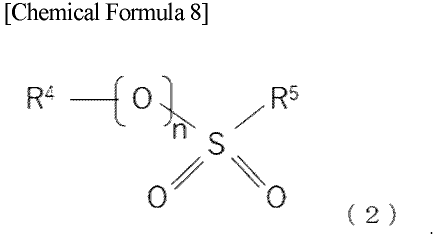

Hereinafter, the hexavalent sulfur compounds represented by General Formula (2) are also referred to as "sulfur compounds (2)". In General Formula (2), n is 0 or 1.

When n is 0, R4 may be a fluorine atom, a hydrocarbon group, an imide group, or a silyl group. When n is 1, R4 may be a hydrocarbon group, a silyl group, or an alkali metal. R5 may be a fluorine atom, a hydrocarbon group, an imide group, or a silyl group. R4 and R5 may form a ring. That is to say, the hexavalent sulfur compounds may be cyclic sulfur compounds. The sulfur compounds (2) may include two hexavalent sulfur atoms. In this case, R5 may be an imide group, an alkylene group, or an ether group shared by the two sulfur atoms.

The tetravalent sulfur compounds have, for example, a structure represented by General Formula (3):

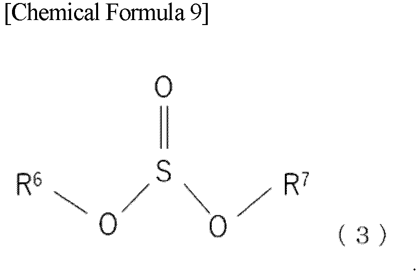

Hereinafter, the tetravalent sulfur compounds represented by General Formula (3) are also referred to as "sulfur compounds (3)". In General Formula (3), R6 and R7 may be each independently a hydrocarbon group, a silyl group, or an alkali metal.

R6 and R7 may be an alkyl group, an alkenyl group, or an aryl group. R6 and R7 may form an alkylene group, an alkenylene group, an ether group, or the like to form a ring. That is to say, the tetravalent sulfur compounds may be cyclic sulfur compounds. The sulfur compounds (3) may include two tetravalent sulfur atoms. In this case, R6 and R7 may be an alkylene group or an ether group shared by the two sulfur atoms.

When one or more of R4 to R7 are aliphatic hydrocarbon groups, it is desirable that the steric hindrance is smaller, and R4 to R7 may be, for example, a C₁₋₅ hydrocarbon group having 1 to 5 carbon atoms. When one or more of R4 to R7 are aromatic hydrocarbon groups (aryl groups), the number of the aromatic ring may be one. When R4 and R5 or R6 and R7 form a ring, the ring may be a five-membered ring, a six-membered ring, or a seven-membered ring. When one or more of R4, R6, and R7 are alkali metals, the alkali metals may be Li, K, Na, or the like. When R4 to R7 form a ring, R4 and R5 or R6 and R7 are integrated and form, for example, an alkylene group, an alkenylene group, an ether group, or the like.

It is desirable that General Formula (2) satisfies n=1. That is to say, it is desirable that the sulfur compounds (2) are represented by General Formula (4):

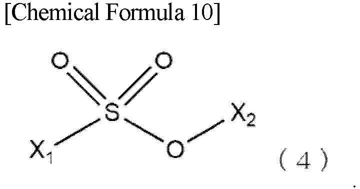

As described above, X1 is a fluorine atom, a hydrocarbon group, an imide group, or a silyl group, and X2 is a hydrocarbon group, a silyl group, or an alkali metal. In General Formula (4), at least one hydrogen atom of the hydrocarbon group may be substituted with a halogen atom.

When X1 of the sulfur compound (4) is a fluorine atom, it is desirable that X2 is an alkyl group, an alkenyl group, an aryl group, a silyl group, or an alkali metal. When X1 is a hydrocarbon group, X1 and X2 may form an alkylene group, an alkenylene group, an ether group, or the like to form a ring. The sulfur compounds (4) may include two hexavalent sulfur atoms. In this case, X1 may be an ether group shared by the two sulfur atoms, and X2 may be an alkylene group shared by the two sulfur atoms.

The sulfur compounds (2) encompass sulfuric esters having a -O-S(=O)₂-O- structure, and sulfonic esters having a -S(=O)₂-O- structure. The sulfur compounds (3) are sulfurous esters having a -O-S(=O)-O- structure. Accordingly, it can be said that the sulfur-containing compound is at least one compound selected from the group consisting of sulfuric esters, sulfurous esters, and sulfonic esters.

C₂₋₄ alkyl sulfates are preferable as the sulfuric esters. Specific examples thereof include ethylene sulfate, propylene sulfate, trimethylene sulfate, butylene sulfate, vinylene sulfate, ethyl sulfate, methyl sulfate, and the like.

C₂₋₄ alkylene sulfites are preferable as the sulfurous esters. Specific examples thereof include ethylene sulfite (ES), propylene sulfite, trimethylene sulfite, butylene sulfite, vinylene sulfite, and the like.

At least one selected from C₃₋₅ alkane sultones and C₃₋₅ alkene sultones is preferable as the sulfonic esters. Specific examples thereof include 1,3-propanesultone, 1,4-butanesultone, 1,3-propenesultone, and the like.

In the sulfur-containing compounds, one or more hydrogen atoms of the compounds exemplified above may be substituted with a substituent. Examples of the substituent include alkyl groups, hydroxyalkyl groups, a hydroxy group, alkoxy groups, halogen atoms, and the like. The substituent may have 1 to 3 carbon atoms. The halogen atom is desirably a fluorine atom.

Among the hexavalent sulfur compounds, at least one compound selected from the group consisting of lithium fluorosulfonate (LiFSO₃), 1-propene-1,3-sultone (PRS), ethylene sulfate (DTD), lithium bisfluorosulfonyl imide (LiFSI), and 1,5,2,4-dioxadithiane-2,2,4,4-tetraoxide (MMDS) is particularly desirable because they are readily available and have significant effects of improving the high-temperature cycle characteristics while reducing the resistance.

Among the tetravalent sulfur compounds, at least one compound selected from the group consisting of ethylene sulfite (ES) and vinylethylene sulfite (VES) is particularly desirable because they are readily available and have significant effects of improving the high-temperature cycle characteristics while reducing the resistance.

The content of the sulfur-containing compound in the non-aqueous electrolyte is, for example, 5 mass% or less, and may be 0.01 mass% to 5 mass%, 0.01 mass% to 2.5 mass%, 0.1 mass% to 2.0 mass%, or 0.5 mass% to 1.5 mass%. It is considered that, in this case, the side reaction suppressing effect is improved because the viscosity of the non-aqueous electrolyte does not excessively increase, the hybrid coatings are suitably formed, and a charge and discharge reaction is likely to uniformly progress. However, in the secondary battery, the sulfur-containing compound is consumed to form the coatings. Accordingly, it is sufficient that the concentration of the sulfur-containing compound in the non-aqueous electrolyte collected from the secondary battery is higher than or equal to the detection limit.

The non-aqueous electrolyte may contain an additive other than those described above. Such an additive may be, for example, at least one additive selected from the group consisting of vinylene carbonate, fluoroethylene carbonate, and vinylethylene carbonate.

### (Non-Aqueous Solvent)

Examples of the non-aqueous solvent include cyclic carbonic acid esters, chain carbonic acid esters, cyclic carboxylic acid esters, chain carboxylic acid esters, cyclic ethers, chain ethers, and the like. The non-aqueous electrolyte may include one type of non-aqueous solvent or a combination of two or more types of non-aqueous solvents.

Examples of the cyclic carbonic acid esters include propylene carbonate (PC), ethylene carbonate (EC), fluoroethylene carbonate (FEC), vinylene carbonate (VC), and the like.

Examples of the chain carbonic acid esters include diethyl carbonate (DEC), ethylmethyl carbonate (EMC), dimethyl carbonate (DMC), and the like.

Examples of the cyclic carboxylic acid esters include γ-butyrolactone (GBL), γ-valerolactone (GVL), and the like.

Examples of the chain carboxylic acid esters include methyl formate, ethyl formate, propyl formate, methyl acetate (MA), ethyl acetate, propyl acetate, methyl propionate, ethyl propionate, propyl propionate, and the like.

Examples of the cyclic ethers include 1,3-dioxolane, 4-methyl-1,3-dioxolane, tetrahydrofuran, 2-methyltetrahydrofuran, and the like.

Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethylene glycol dimethyl ether, 1, 1,2,2-tetrafluoroethyl-2,2,2-trifluoroethyl ether, 1,1,2,2-tetrafluoroethyl-2,2,3,3-tetrafluoropropyl ether, and the like.

### (Salt)

In lithium-ion secondary batteries, lithium-metal secondary batteries, and the like, a lithium salt is used as the salt. Examples thereof include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lower aliphatic carboxylic acid lithium salts, LiCl, LiBr, LiI, phosphates, borates, imide salts, and the like. Examples of the phosphates include lithium difluorophosphate (LiPO₂F₂), lithium difluorobis(oxalato)phosphate (LiDFBOP), lithium tetrafluoro(oxalato)phosphate, and the like. Examples of the borates include lithium bis(oxalato)borate (LiBOB), lithium difluoro(oxalato)borate (LiDFOB), and the like. As the imide salts, lithium bis(fluorosulfonyl)imide (LiN(FSO₂)₂), lithium bis(trifluoromethanesulfonyl)imide (LiN(CF₃SO₂)₂), lithium(trifluoromethanesulfonyl)(nonafluorobutanesulfonyl)imide (LiN(CF₃SO₂)(C₄F₉SO₂)), lithium bis(pentafluoroethanesulfonyl)imide (LiN(C₂F₅SO₂)₂), and the like are used. The non-aqueous electrolyte may include one type of lithium salt or a combination of two or more types of lithium salts.

The concentration of the lithium salt in the non-aqueous electrolyte is, for example, 0.5 mol/L or higher and 2 mol/L or lower.

The content of each component in the non-aqueous electrolyte can be determined using, for example, gas chromatography under, for example, the following conditions.
Measurement apparatus: GC-2010Plus manufactured by Shimadzu Corporation
Column: HP-1 (1 µm × 60 m) manufactured by J&W Scientific
Linear velocity: 30.0 cm/sec
Inlet temperature: 270°C
Detector: FID290°C (sens.10¹)

The following specifically describes other constituent elements of the non-aqueous electrolyte secondary battery of the present disclosure.

### [Positive Electrode]

The positive electrode includes a positive electrode current collector and a positive electrode mixture layer provided on the surface of the positive electrode current collector. The positive electrode current collector is formed using a sheet-like conductive material. The positive electrode mixture layer is supported on one or both surfaces of the positive electrode current collector. The positive electrode mixture layer is typically a layer or membrane composed of a positive electrode mixture. The thickness of the positive electrode mixture layer on one surface of the positive electrode current collector is, for example, 10 µm to 150 µm. The positive electrode mixture contains a positive electrode active material as an essential component.

The positive electrode mixture layer may also contain a conductive agent as an optional component. Examples of the conductive agent include carbon-based materials such as carbon black (CB), acetylene black (AB), Ketjen black, carbon nanotubes (CNTs), graphene, graphite, and the like. One of these conductive agents may be used alone, or two or more of these conductive agents may be used in combination.

The positive electrode mixture layer may also contain a binding agent. Examples of the binding agent include fluororesins such as polytetrafluoroethylene (PTFE) and polyvinylidene fluoride (PVDF), polyacrylonitrile (PAN), polyimide-based resins, acrylic resins, polyolefin-based resins, and the like. One of these binding agents may be used alone, or two or more of these binding agents may be used in combination.

A non-porous conductive substrate (e.g., a metallic foil) or a porous conductive substrate (e.g., a mesh body, a net body, or a punched sheet) is used as the positive electrode current collector. Examples of the material of the positive electrode current collector include aluminum, aluminum alloys, titanium, titanium alloys, and the like.

A lithium-containing composite oxide can be used as the positive electrode active material. The lithium-containing composite oxide may have a layered rock salt structure. The layered rock salt structure may belong to, for example, the space group R-3m, the space group C2/m, or the like. In particular, a layered rock salt structure belonging to the space group R-3m is preferable due to its high capacity and stable crystal structure. The layered rock salt structure of the lithium-containing composite oxide may include a transition metal layer, a Li layer, and an oxygen layer.

From the viewpoint of increasing the capacity, the proportion of Ni (Ni content) in metallic elements other than Li contained in the lithium-containing composite oxide may be 50 atom% or more, 80 atom% or more, or 90 atom% or more.

From the viewpoint of stabilizing the crystal structure of the lithium-containing composite oxide and improving the thermal resistance of the battery, the proportion of Co (Co content) in metallic elements other than Li contained in the lithium-containing composite oxide may be 0 atom% or more and 16 atom% or less, or 1.5 atom% or more and 16 atom% or less.

Similarly, from the viewpoint of stabilizing the crystal structure of the lithium-containing composite oxide and improving the thermal resistance of the battery, the proportion of Al (Al content) in metallic elements other than Li contained in the lithium-containing composite oxide may be 0 atom% or more and 18.5 atom% or less, or 4 atom% or more and 10 atom% or less.

From the viewpoint of reducing cost, the proportion of Mn (Mn content) in metallic elements other than Li contained in the lithium-containing composite oxide may be 0 atom% or more and 50 atom% or less, or 0 atom% or more and 30 atom% or less.

The content of each metallic element contained in the lithium-containing composite oxide is measured through, for example, inductively coupled plasma (ICP) optical emission spectroscopy.

The lithium-containing composite oxide may be a composite oxide represented by, for example, a general formula LiₐNiₓCo_{y}Al_{z}M1_{w}O_{2-b} (where the relationships, 0.8≤a≤1.2, 0.80≤x≤0.95, 0.015≤y≤0.16, 0.04≤z≤0.185, 0≤w≤0.145, 0≤b<0.05, and x+y+z+w=1, are satisfied, and M1 is at least one element selected from Mn, Fe, Ti, Si, Nb, Zr, Mo, and Zn). In this case, M1 is preferably Mn.

### [Negative Electrode]

The negative electrode includes a negative electrode current collector and may have a negative electrode mixture layer provided on the surface of the negative electrode current collector. The negative electrode current collector is formed using a sheet-like conductive material. The negative electrode mixture layer is supported on one or both surfaces of the negative electrode current collector. The negative electrode mixture layer is typically a layer or membrane composed of a negative electrode mixture. The thickness of the negative electrode mixture layer on one surface of the negative electrode current collector is, for example, 10 µm to 150 µm. The negative electrode mixture contains a negative electrode active material as an essential component and can contain a binding agent, a conductive agent, a thickening agent, and the like as optional components. Known materials can be used as the binding agent, the conductive agent, and the thickening agent.

The negative electrode active material contains a material that electrochemically occludes and releases lithium ions, lithium metal, a lithium alloy, or the like. A carbon material, an alloy-based material, or the like is used as the material that electrochemically occludes and releases lithium ions.

Examples of the carbon material include graphite, graphitizable carbon (soft carbon), non-graphitizable carbon (hard carbon), and the like. In particular, graphite is preferable because it has excellent charge/discharge stability and low irreversible capacity.

Graphite is a carbonaceous material with a developed graphite-type crystal structure. The interplanar distance d002 between (002) planes of graphite measured using the X-ray diffraction method may be, for example, 0.340 nm or less, or 0.3354 nm or more and 0.340 nm or less. The crystallite size Lc(002) of graphite may be, for example, 5 nm or more, or 5 nm or more and 200 nm or less. The crystallite size Lc(002) is measured using, for example, the Scherrer method. When the interplanar distance d002 between (002) planes of graphite and the crystallite size Lc(002) of graphite are within the ranges above, a high capacity cab be easily achieved.

The alloy-based material is a material containing at least one of metals capable of forming an alloy with lithium. Examples of such materials include silicon, tin, silicon alloys, tin alloys, silicon oxide, tin oxide, silicon-containing materials, and the like.

The silicon-containing material includes, for example, a lithium ion conductive phase, and a silicon phase dispersed in the lithium ion conductive phase. For example, a silicon oxide phase, a silicate phase, a carbon phase, or the like can be used as the lithium ion conductive phase. The content of the silicon phase dispersed in the lithium ion conductive phase is, for example, 30 mass% or more and 95 mass% or less, and may be 35 mass% or more and 75 mass% or less. One of the silicon-containing materials may be used alone, or two or more of the silicon-containing materials may be used in combination.

The main component (e.g., 95 to 100 mass%) of the silicon oxide phase can be silicon dioxide. The silicon-containing material that includes the silicon oxide phase and the silicon phase dispersed in the silicon oxide phase is represented by SiOₓ. x satisfies, for example, 0.5≤x<2, and may satisfy 0.8≤x≤1.6. The silicon oxide phase may be an amorphous phase. SiOₓ is obtained through, for example, a disproportionation reaction of silicon monoxide.

The silicate phase is preferable in terms of small irreversible capacity. In particular, a silicate phase containing lithium (such a phase is also referred to as a "lithium silicate phase" hereinafter) can be favorably used as a lithium ion conductive phase with high initial charge/discharge efficiency.

The lithium silicate phase need only be an oxide phase containing lithium (Li), silicon (Si), and oxygen (O), and may also contain other elements. The atomic ratio of O to Si (O/Si) in the lithium silicate phase is, for example, greater than 2 and smaller than 4. O/Si is preferably greater than 2 and smaller than 3. The atomic ratio of Li to Si (Li/Si) in the lithium silicate phase is, for example, greater than 0 and smaller than 4. The lithium silicate phase can have a composition represented by a formula: Li_{2z}SiO_{2+z} (0<z<2). It is preferable that z satisfies the relationship 0<z<1, and it is more preferable that z is 1/2. Examples of elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), and the like.

The carbon phase may be composed of, for example, non-crystalline carbon (i.e., amorphous carbon) with low crystallinity. The non-crystalline carbon may be, for example, hard carbon, soft carbon, or the others.

The silicon-containing material in which the silicon phase is dispersed in the carbon phase is obtained by, for example, pulverizing a mixture of a carbon source and raw material silicon into fine particles using a ball mill or the like while stirring the mixture, and then heating the mixture in an inert atmosphere. Examples of the carbon source include saccharides such as carboxymethyl cellulose (CMC), and water-soluble resins such as polyvinylpyrrolidone.

The silicon-containing material and the carbon material may be used together as the negative electrode active material. The volume of the silicon-containing material increases and decreases due to charge and discharge, and therefore, if the ratio of the silicon-containing material in the negative electrode active material increases, contact failure between the negative electrode active material and the negative electrode current collector is likely to occur during charge and discharge. Meanwhile, using the silicon-containing material and the carbon material together makes it possible to achieve excellent cycle characteristics even while imparting high capacity to the negative electrode.

The proportion of the silicon-containing material in the sum of the silicon-containing material and the carbon material is, for example, preferably 0.5 to 15 mass% and more preferably 1 to 10 mass%. This makes it easy to achieve both an increase in capacity and an improvement in cycle characteristics.

A non-porous conductive substrate (e.g., a metallic foil) or a porous conductive substrate (e.g., a mesh body, a net body, or a punched sheet) is used as the negative electrode current collector. Examples of the material of the negative electrode current collector include stainless steel, nickel, nickel alloys, copper, copper alloys, and the like.

The composition of the silicon-containing material can be determined by, for example, obtaining a backscattered electron image of a cross section of the negative electrode mixture layer using a field emission scanning electron microscope (FE-SEM), observing the particles of the silicon-containing material, and conducting elemental analysis of the observed particles of the silicon-containing material. For example, analysis with an electron probe micro analyzer (EPMA) and the like are used for the elemental analysis.

The negative electrode mixture layer may contain a binding agent. Examples of the binding agent include fluororesins (e.g., polytetrafluoroethylene and polyvinylidene fluoride), polyolefin resins (e.g., polyethylene and polypropylene), polyamide resins (e.g., aramid resin), polyimide resins (e.g., polyimide and polyamideimide), acrylic resins (e.g., polyacrylic acid, polymethacrylic acid, acrylic acid-methacrylic acid copolymers, and ethylene-acrylic acid copolymers, or salts thereof), vinyl resins (e.g., polyvinyl acetate), and rubbery materials (e.g., styrene-butadiene copolymer rubber (SBR)). One of the binding agents may be used alone, or two or more of the binding agents may be used in combination.

The negative electrode mixture layer may contain a thickening agent. Examples of the thickening agent include cellulose derivatives such as cellulose ethers. Examples of the cellulose derivatives include CMC, modified CMC, methyl cellulose, and the like. The modified CMC also includes salts of CMC. Examples of the salts include alkali metal salts (e.g., a sodium salt), ammonium salts, and the like. One of the thickening agents may be used alone, or two or more of the thickening agents may be used in combination.

The negative electrode mixture layer may contain a conductive agent. Examples of the conductive agent include carbon nanotubes (CNTs) and conductive particles. Examples of the conductive particles include conductive carbon (e.g., carbon black) and metallic particles. One of the conductive agents may be used alone, or two or more of the conductive agents may be used in combination.

The negative electrode current collector is selected in accordance with the type of non-aqueous electrolyte secondary battery. The negative electrode current collector may be, for example, in the form of a sheet. A metallic foil or the like may be used as the current collector. Also, a porous current collector may be used. Examples of the porous current collector include a net-like current collector, a punched sheet, and an expanded metal.

Examples of the material of the negative electrode current collector include stainless steel, nickel, nickel alloys, copper, and copper alloys.

### [Separator]

It is desirable to interpose a separator between the positive electrode and the negative electrode. The separator has high ion permeability, and appropriate mechanical strength and insulating properties. The separator may be, for example, a microporous thin film, a woven cloth, or a nonwoven cloth, or a laminate of at least two selected therefrom. The material of the separator is preferably a polyolefin (e.g., polypropylene or polyethylene).

An example of the structure of the non-aqueous electrolyte secondary battery is a structure in which an electrode group formed by rolling up a positive electrode and a negative electrode with the separator interposed therebetween is housed in an exterior body together with an electrolytic solution. However, there is no limitation to this structure, and an electrode group in another form may be applied. For example, a stacked-type electrode group formed by stacking a positive electrode and a negative electrode with the separator interposed therebetween may be used. The shape of the non-aqueous electrolytic solution secondary battery is not limited, and need only be, for example, cylindrical, rectangular, coin-shaped, button-shaped, laminated, or the like.

The following describes the structure of the non-aqueous electrolyte secondary battery with reference to FIG. 1. FIG. 1 is vertical cross-sectional view of a cylindrical secondary battery, which is an example of this embodiment. However, the present disclosure is not limited to the following configuration.

A non-aqueous electrolyte secondary battery (referred to as a "battery 10" hereinafter) includes an electrode group 18, a non-aqueous electrolyte (not illustrated), and a bottomed cylindrical battery can 22 in which the battery group 18 and the non-aqueous electrolyte are housed. A sealing body 11 is crimped and fixed to an opening portion of the battery can 22 via a gasket 21. Thereby, the battery is sealed. The sealing body 11 includes a valve body 12, a metallic plate 13, and an annular insulating member 14 interposed between the valve body 12 and the metallic plate 13. The central portions of the valve body 12 and the metallic plate 13 are connected to each other. A positive electrode lead 15a led out from a positive electrode 15 is connected to the metallic plate 13. Accordingly, the valve body 12 functions as an external terminal for the positive electrode. A negative electrode lead 16a led out from a negative electrode 16 is connected to the interior surface of the bottom of the battery can 22. An annular groove 22a is formed in the vicinity of the opening end of the battery can 22. A first insulating plate 23 is disposed between one end surface of the electrode group 18 and the annular groove 22a. A second insulating plate 24 is disposed between the other end surface of the electrode group 18 and the bottom of the battery can 22. The electrode group 18 is formed by rolling up the positive electrode 15 and the negative electrode 16 with a separator 17 interposed therebetween.

### (Supplementary Notes)

The description above discloses the following technology.

### (Technology 1)

A non-aqueous electrolyte for a secondary battery, including:
a non-aqueous solvent;
a salt soluble in the non-aqueous solvent; and
an additive soluble in the non-aqueous solvent,
wherein the additive includes a heterocyclic compound and a sulfur-containing compound,
the heterocyclic compound is represented by General Formula (1):

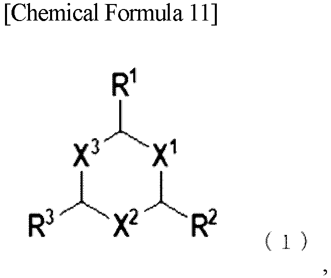

X1 to X3 are each independently an oxygen atom or a sulfur element, and
R1 to R3 are each independently an alkyl group having 1 to 5 carbon atoms in which at least one hydrogen atom may be substituted with a halogen atom.

### (Technology 2)

The non-aqueous electrolyte for a secondary battery according to technology 1,
wherein the sulfur-containing compound includes at least one compound selected from the group consisting of hexavalent sulfur compounds and tetravalent sulfur compounds,
the hexavalent sulfur compounds have a structure represented by General Formula (2): 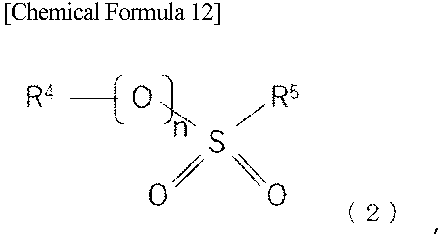
the tetravalent sulfur compounds have a structure represented by General Formula (3): 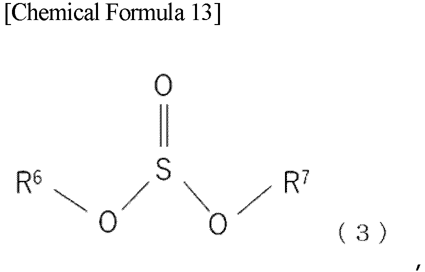
n is 0 or 1,
R4 is
   a fluorine atom, a hydrocarbon group, an imide group, or a silyl group when n is 0, and
   a hydrocarbon group, a silyl group, or an alkali metal when n is 1, R5 is a fluorine atom, a hydrocarbon group, an imide group, or a silyl group, R6 and R7 are each independently a hydrocarbon group, a silyl group, or an alkali metal,
   at least one hydrogen atom of the hydrocarbon group may be substituted with a halogen atom,
R4 and R5 may form a ring, and
R6 and R7 may form a ring.

### (Technology 3)

The non-aqueous electrolyte for a secondary battery according to technology 2,
wherein the hexavalent sulfur compounds are represented by General Formula (4): 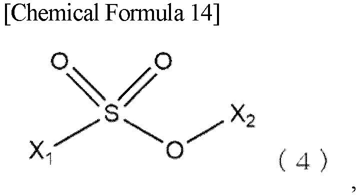
X1 is a fluorine atom, a hydrocarbon group, an imide group, or a silyl group,
X2 is a hydrocarbon group, a silyl group, or an alkali metal, and
at least one hydrogen atom of the hydrocarbon group may be substituted with a halogen atom.

### (Technology 4)

The non-aqueous electrolyte for a secondary battery according to any one of technologies 1 to 3, wherein a content of the heterocyclic compound is 3 mass% or less.

### (Technology 5)

The non-aqueous electrolyte for a secondary battery according to any one of technologies 1 to 4, wherein a content of the sulfur-containing compound is 5 mass% or less.

### (Technology 6)

The non-aqueous electrolyte for a secondary battery according to any one of technologies 1 to 5, wherein the heterocyclic compound includes at least one compound selected from the group consisting of paraldehyde, trithioacetaldehyde, 2,4,6-triethyl-1,3,5-trioxane, 2,4,6-tripropyl-1,3,5-trioxane, and 2,4,6-tris(propan-2-yl)-1,3,5-trioxane.

### (Technology 7)

The non-aqueous electrolyte for a secondary battery according to any one of technologies 1 to 6, wherein the hexavalent sulfur compounds include at least one compound selected from the group consisting of lithium fluorosulfonate (LiFSO3), 1-propene-1,3-sultone (PRS), ethylene sulfate (DTD), lithium bisfluorosulfonyl imide (LiFSI), and 1,5,2,4-dioxadithiane-2,2,4,4-tetraoxide (MMDS).

### (Technology 8)

The non-aqueous electrolyte for a secondary battery according to any one of technologies 1 to 7, wherein the tetravalent sulfur compounds include at least one compound selected from the group consisting of ethylene sulfite (ES) and vinylethylene sulfite (VES).

### (Technology 9)

A secondary battery including:
a positive electrode;
a separator;
a negative electrode that faces the positive electrode with the separator interposed between the positive electrode and the negative electrode; and
a non-aqueous electrolyte,
wherein the non-aqueous electrolyte is the non-aqueous electrolyte for a secondary battery according to any one of technologies 1 to 8.

Although the presently preferred embodiments of the present invention have been described, it is to be understood that such a disclosure is not to be interpreted as limiting. Various alterations and modifications will no doubt become apparent to those skilled in the art to which the present invention pertains, after having read the disclosure above. Accordingly, it is intended that the appended claims be interpreted as covering all alterations and modifications that fall within the true spirit and scope of the invention.

### [Examples]

Hereinafter, the present invention will be specifically described based on examples and comparative examples, but the present invention is not limited to the following examples.

### <<Examples 1 to 8 and Comparative Examples 1 to 6>>

Non-aqueous electrolyte secondary batteries were produced and evaluated in accordance with the following procedure.

### (1) Production of Positive Electrode

A positive electrode slurry was obtained by adding 2.5 parts by mass of acetylene black, 2.5 parts by mass of polyvinylidene fluoride, and an appropriate amount of N-methyl-2-pyrrosidone (NMP) to 95 parts by mass of a lithium-containing composite oxide (LiNi_{0.8}Co_{0.1}8Al_{0.02}O₂) and mixing them. Next, the positive electrode slurry was applied onto the surfaces of an aluminum foil, and the coatings were dried. Then, positive electrode mixture layers (each having a thickness of 95 µm and a density of 3.6 g/cm³) were formed on both surfaces of the aluminum foil through rolling, and thus a positive electrode was obtained.

### (2) Production of Negative Electrode

An appropriate amount of water was added to and mixed with a negative electrode mixture, and thus a negative electrode slurry was obtained. A mixture of a negative electrode active material, a binding agent, and a conductive agent was used as the negative electrode mixture. A mixture of a silicon-containing material and graphite (with an average particle diameter (D50) of 25 µm) was used as the negative electrode active material. SiOx particles (x=1; average particle diameter (D50): 5 µm) whose surfaces were coated with a conductive layer made of conductive carbon were used as the silicon-containing material. In the negative electrode active material, the mass ratio between the silicon-containing material excluding the conductive layer and the graphite was 6:94. Sodium polyacrylate (PAA-Na), a sodium salt of CMC (CMC-Na), and SBR were used as the binding agents. The contents of PAA-Na, CMC-Na, and SBR in the negative electrode mixture were each 1 mass%. Next, the negative electrode slurry was applied onto the surfaces of a copper foil, and the coatings were dried. Then, negative electrode mixture layers (each having a thickness of 80 µm and a density of 1.6 g/cm³) were formed on both surfaces of the copper foil through rolling, and thus a negative electrode was obtained.

### (3) Preparation of Non-Aqueous Electrolyte

A non-aqueous electrolyte was prepared by dissolving LiPF6 and, as necessary, additives listed in Table 1 in a mixed solvent of ethylene carbonate (EC) and ethylmethyl carbonate (EMC) (EC:EMC=30:70 (volume ratio)). The concentration of LiPF₆ in the non-aqueous electrolyte was 1.0 mol/L. The concentrations (initial concentrations) of the additives in the non-aqueous electrolyte were the values (mass%) listed in Table 1.

### (4) Production of Non-Aqueous Electrolyte Secondary Battery

A positive electrode lead made of Al was attached to the positive electrode obtained above, and a negative electrode lead made of Ni was attached to the negative electrode obtained above. A rolled-up type electrode group was produced by rolling up the positive electrode and the negative electrode into a spiral shape with a polyethylene thin film (separator) interposed therebetween in an inert gas atmosphere. A first insulating plate was disposed on the lower end surface of the electrode group, the electrode group was inserted into a battery can, and the negative electrode lead was welded to the bottom of the battery can through resistance welding. An iron can whose interior surface was plated with nickel was used as the battery can. After a second insulating plate was disposed on the upper end surface of the electrode group, an annular groove was formed in the vicinity of the open end of the battery can. Next, the positive electrode lead was connected to a metallic plate of a safety mechanism provided to a sealing body, and the non-aqueous electrolyte above was poured into the battery can. Then, the sealing body was supported on the annular groove formed on the battery can via a gasket, and the opening end of the battery can was crimped to the peripheral edge of the sealing body. Thus, a lithium-ion secondary battery was completed.

### [Evaluation 1] Initial Direct-Current Resistance (DCR)

At 25°C, the battery was charged at a constant current of 0.3It until the voltage reached 4.2 V, and then it was charged at a constant voltage of 4.2 V until the current reached 0.05It. Subsequently, the battery was discharged at a constant current of 0.3It for 100 minutes to bring the state of charge (SOC) to 50%.

The battery whose SOC was 50% was discharged at a current of 0 A, 0.1 A, 0.5 A, or 1.0 A for 10 seconds, and the voltage was measured. The relationship between the discharge current and the voltage after 10 seconds was approximated as a straight line using the least squares method, and DCR (initial DCR) was calculated using the absolute value of the gradient of the straight line. Table 1 shows the relative values (Index) when the DCR of the battery of Comparative Example 1 is taken as 100.

### [Evaluation 2] High-Temperature Cycle Characteristics

At 45°C, the non-aqueous electrolyte secondary battery was charged at a constant current of 0.5It until the voltage reached 4.2 V, and then it was charged at a constant voltage of 4.2 V until the current reached 0.05It. After suspension for 10 minutes, the non-aqueous electrolyte secondary battery was discharged at a constant current of 0.7It until the voltage reached 2.5 V The discharge capacity (Ci) at this time was determined. This round of charge, suspension, and discharge was taken as one cycle, this cycle was repeated 300 times, and the discharge capacity (Cc) after the 300th cycle was determined. The rate (%) of the discharge capacity Cc to the initial discharge capacity Ci taken as 100% was determined as a capacity retention rate.

### [Evaluation 3] Amount of Maintained Gas (80°C/3 days)

At 25°C, the non-aqueous electrolyte secondary battery was charged at a constant current of 0.5It until the voltage reached 4.2 V, and then it was charged at a constant voltage of 4.2 V until the current reached 0.05It. The charged battery was stored at 80°C for 3 days, and a gas was collected from the stored battery. Table 1 shows the relative values (Index) when the amount of the gas from the battery of Comparative Example 1 is taken as 100.

Table 1 shows the results from the examples and the comparative examples. In Table 1, E1 to E8 correspond to Examples 1 to 8, respectively, and C1 to C6 correspond to Comparative Examples 1 to 6, respectively.

The additives indicated in the table are as follows.
PAD: paraldehyde
TAD: trithioacetaldehyde
TEY: 2,4,6-triethyl-1,3,5-trioxane
TPYT: 2,4,6-tripropyl-1,3,5-trioxane
TPAT: 2,4,6-tris(propan-2-yl)-1,3,5-trioxane
TOX: 1,3,5-trioxane
LiFSO₃: lithium fluorosulfonate
PRES: 1-propene-1,3-sultone
ES: ethylene sulfite
DTD: ethylene sulfate

**[Table 1]**

| | Heterocyclic compound (1) | | Sulfur-containing compound | | Initial DCR | Capacity retention rate | Amount of gas after storage |
|---|---|---|---|---|---|---|---|
| | Type | Mass% | Type | Mass% | Index | (%) | (%) |
| E1 | PAD | 1.0 | LiFSO₃ | 1.0 | 90 | 74.6 | 79 |
| E2 | PAD | 1.0 | PRES | 1.0 | 97 | 74.2 | 74 |
| E3 | PAD | 1.0 | ES | 1.0 | 87 | 73.9 | 77 |
| E4 | PAD | 1.0 | DTD | 1.0 | 95 | 74.2 | 79 |
| E5 | TAD | 1.0 | LiFSO₃ | 1.0 | 94 | 73.8 | 82 |
| E6 | TEY | 1.0 | LiFSO₃ | 1.0 | 92 | 74.2 | 77 |
| E7 | TPYT | 1.0 | LiFSO₃ | 1.0 | 91 | 74.4 | 78 |
| E8 | TPAT | 1.0 | LiFSO₃ | 1.0 | 91 | 74.5 | 78 |
| C1 | - | - | - | - | 100 | 72.7 | 100 |
| C2 | - | - | ES | 1.0 | 94 | 70.2 | 94 |
| C3 | - | - | PRES | 1.0 | 104 | 71.9 | 87 |
| C4 | TOX | 1.0 | - | - | 107 | 71.1 | 91 |
| C5 | PAD | 1.0 | - | - | 97 | 72.6 | 87 |
| C6 | TOX | 1.0 | LiFSO₃ | 1.0 | 103 | 71.9 | 103 |

As shown in Table 1, it can be seen that, when used alone, the heterocyclic compound (1) hardly exhibits the effect of improving the high-temperature cycle characteristics (C1 and C5). It can also be seen that the heterocyclic compound (1) exhibits the effect of reducing the initial resistance although slightly (C1 and C4 to C7). Meanwhile, it can be seen that, when used alone, the sulfur-containing compound rather deteriorates the high-temperature cycle characteristics (C1 to C3). In the batteries C1 to C6, low DCR and favorable high-temperature cycle characteristics cannot be achieved with balance.

In contrast, in the batteries E1 to E8, low DCR and favorable high-temperature cycle characteristics are achieved with balance. Also, it can be seen from the comparison between the battery C6 and the battery E1 that such synergistic effects are specifically exhibited when the heterocyclic compound (1) is used. Furthermore, it can be seen that the amount of the gas generated during the storage at a high temperature is prominently reduced because the coating composed of the sulfur-containing compound and the heterocyclic compound (1) has high thermal stability and significantly suppresses redox decomposition of the non-aqueous electrolyte.

### [Industrial Applicability]

The non-aqueous electrolyte secondary battery according to the present disclosure is useful as a main power source for mobile communication devices, portable electronic devices, and the like. However, the applications of the non-aqueous electrolyte secondary battery are not limited thereto.

### [Reference Signs List]

10: Secondary battery, 11: Sealing body, 12: Valve body, 13: Metallic plate, 14: Insulating member, 15: Positive electrode, 15a: Positive electrode lead, 16: Negative electrode, 16a: Negative electrode lead, 17: Separator, 18: Electrode group, 21: Gasket, 22: Battery can, 22a: Groove, 23: First insulating plate, 24: Second insulating plate, 16: Negative electrode

## Claims

1. A non-aqueous electrolyte for a secondary battery, comprising:
a non-aqueous solvent;
a salt soluble in the non-aqueous solvent; and
an additive soluble in the non-aqueous solvent,
wherein the additive includes a heterocyclic compound and a sulfur-containing compound,
the heterocyclic compound is represented by General Formula (1): 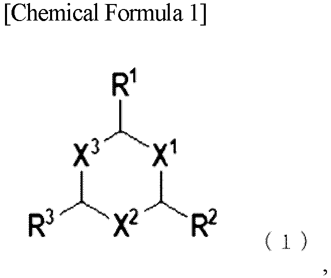
X1 to X3 are each independently an oxygen atom or a sulfur element, and
R1 to R3 are each independently an alkyl group having 1 to 5 carbon atoms in which at least one hydrogen atom may be substituted with a halogen atom.

2. The non-aqueous electrolyte for a secondary battery according to claim 1,
wherein the sulfur-containing compound includes at least one compound selected from the group consisting of hexavalent sulfur compounds and tetravalent sulfur compounds,
the hexavalent sulfur compounds have a structure represented by General Formula (2): 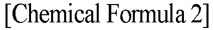 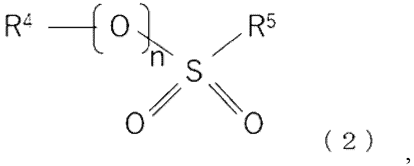
the tetravalent sulfur compounds have a structure represented by General Formula (3): 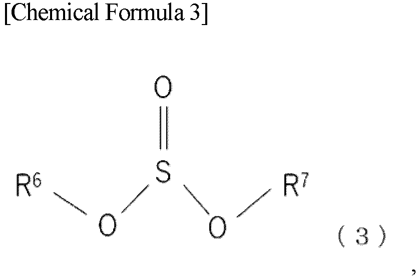
n is 0 or 1,
R4 is
a fluorine atom, a hydrocarbon group, an imide group, or a silyl group when n is 0, and
a hydrocarbon group, a silyl group, or an alkali metal when n is 1,
R5 is a fluorine atom, a hydrocarbon group, an imide group, or a silyl group,
R6 and R7 are each independently a hydrocarbon group, a silyl group, or an alkali metal,
at least one hydrogen atom of the hydrocarbon group may be substituted with a halogen atom,
R4 and R5 may form a ring, and
R6 and R7 may form a ring.

3. The non-aqueous electrolyte for a secondary battery according to claim 2,
wherein the hexavalent sulfur compounds are represented by General Formula (4): 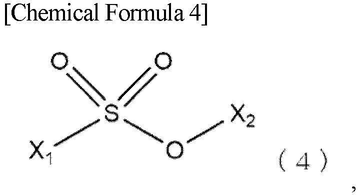
X1 is a fluorine atom, a hydrocarbon group, an imide group, or a silyl group,
X2 is a hydrocarbon group, a silyl group, or an alkali metal, and
at least one hydrogen atom of the hydrocarbon group may be substituted with a halogen atom.

4. The non-aqueous electrolyte for a secondary battery according to claim 1,
wherein a content of the heterocyclic compound is 3 mass% or less.

5. The non-aqueous electrolyte for a secondary battery according to claim 1,
wherein a content of the sulfur-containing compound is 5 mass% or less.

6. The non-aqueous electrolyte for a secondary battery according to claim 1,
wherein the heterocyclic compound includes at least one compound selected from the group consisting of paraldehyde, trithioacetaldehyde, 2,4,6-triethyl-1,3,5-trioxane, 2,4,6-tripropyl-1,3,5-trioxane, and 2,4,6-tris(propan-2-yl)-1,3,5-trioxane.

7. The non-aqueous electrolyte for a secondary battery according to claim 1,
wherein the hexavalent sulfur compounds include at least one compound selected from the group consisting of lithium fluorosulfonate, 1-propene-1,3-sultone, ethylene sulfate, lithium bisfluorosulfonyl imide, and 1,5,2,4-dioxadithiane-2,2,4,4-tetraoxide.

8. The non-aqueous electrolyte for a secondary battery according to claim 1,
wherein the tetravalent sulfur compounds include at least one compound selected from the group consisting of ethylene sulfite and vinylethylene sulfite.

9. A secondary battery comprising:
a positive electrode;
a separator;
a negative electrode that faces the positive electrode with the separator interposed between the positive electrode and the negative electrode; and
a non-aqueous electrolyte,
wherein the non-aqueous electrolyte is the non-aqueous electrolyte for a secondary battery according to claim 1.
